# EUROPEAN PATENT APPLICATION

(11) **EP 2 642 716 A1**
(43) Date of publication of application: **25.09.2013**
(21) Application number: 12250070.5
(22) Date of filing: 22.03.2012
(51) Int. Cl.: H04L 29/06, H04L 12/58

(54) **Electronic communications device**

(71) Applicant: British Telecommunications public limited company, London EC1A 7AJ (GB)
(72) Inventor: The designation of the inventor has not yet been filed
(74) Representative: Nash, Roger William

(57) **Abstract**

A method of operating an electronic communications device is disclosed. Conventional electronic communications devices offer the benefit that they facilitate both the copying of information and the transfer of the copied information to other devices. However, this results in the unwanted dissemination of private or confidential information also being facilitated. The disclosed electronic communications device labels derivative transferable information it generates with a derivation label enabling the origin of the derived information to be found. The electronic communications device is arranged to interrupt a transfer of derivative transferable information to seek (116) authorization for the transfer. The authorization involves accessing security data which, in combination with the derivation label, enables the security classification applied to the origin of the derived information to be found (112). Where it is found that the transfer of the original information from which the derived information is derived would not be authorized, the electronic communications device is arranged to abort the transfer or alert the user to the fact that the transfer would breach security transfer rules. The method is of use in controlling the dissemination of private or confidential information via networked electronic communications devices.

## Description

The present invention relates to an electronic communications device, and a method of operating an electronic communications device. It has utility in controlling the dissemination of information. There are manifold reasons for controlling the dissemination of information including maintaining privacy and confidentiality and complying with copyright laws.

A problem with the ease of use of modern electronic communications devices is that it is easy for information which is intended to be kept amongst a set of one or more users to be inadvertently or deliberately disseminated to people who do not belong to that set of users.

According to a first aspect of the present invention, there is provided a method of operating an electronic communications device to control the dissemination of information from said electronic communication device, said method comprising:
in response to a user attempting to use the electronic communications device to disseminate information derived from source information, obstructing the dissemination of the derived information if the dissemination of the source information would be restricted according to restrictions placed on the dissemination of the source information.

By operating an electronic communications device to respond to a user attempting to disseminate information derived from source information by obstructing the dissemination of the derived information if dissemination of the source information would be obstructed in the same circumstances, the dissemination of information derived from private or confidential source information is controlled.

In preferred embodiments, the method further comprises providing the user with a user interface which enables the generation of said derived information from said source information. There are often legitimate reasons for copying information, and it is preferred to provide an electronic communication device which facilitates the legitimate sharing of information rather than the alternative of not providing the device with a copying facility.

There now follows, by way of example only, a description of embodiments of the present invention. The description refers to the accompanying drawings in which:
Figure 1 illustrates an enterprise computer network according to a first embodiment;
Figure 2 illustrates a data item structure used by software applications running on devices in the enterprise computer network;
Figure 3 illustrates a user security clearance table stored in an information security database;
Figure 4 illustrates a data item security classification table stored in the information security database;
Figure 5 illustrates a data item derivation table stored in the information security database;
Figure 6 is a flow-chart illustrating processing carried out when a user uses a database client to export a file from the sensitive customer details database of Figure 1;
Figure 7 is a flow-chart illustrating a data item dissemination checking procedure run by each personal computer in the enterprise computer network of Figure 1;
Figure 8 is a continuation of the flow-chart of Figure 7 which includes a procedure for recording of the creation of a transferable data item;
Figure 9 is a flow-chart showing how the information security server computer of Figure 1 handles a request for the security classification to be applied to a derived data item;
Figure 10 is a flow-chart showing how the information security server computer of Figure 1 handles a request for a decision as to whether the transfer of a data item should be authorized;
Figure 11 is a flow-chart showing how the information security server computer of Figure 1 handles a request to log the creation of an original transferable data item;
Figure 12 is a flow-chart showing how the information security server computer of Figure 1 handles a request to log the creation of a derived transferable data item;
Figure 13 is a flow-chart illustrating a data buffer input handling procedure run on the personal computers of Figure 1;
Figure 14 is a flow-chart illustrating a data buffer output handling procedure run on the personal computers of Figure 1;
Figure 15 illustrates a use case example for the first embodiment;
Figure 16 illustrates an e-mail sent in that use case example;
Figure 17 illustrates an e-mail which is blocked in that use case example.

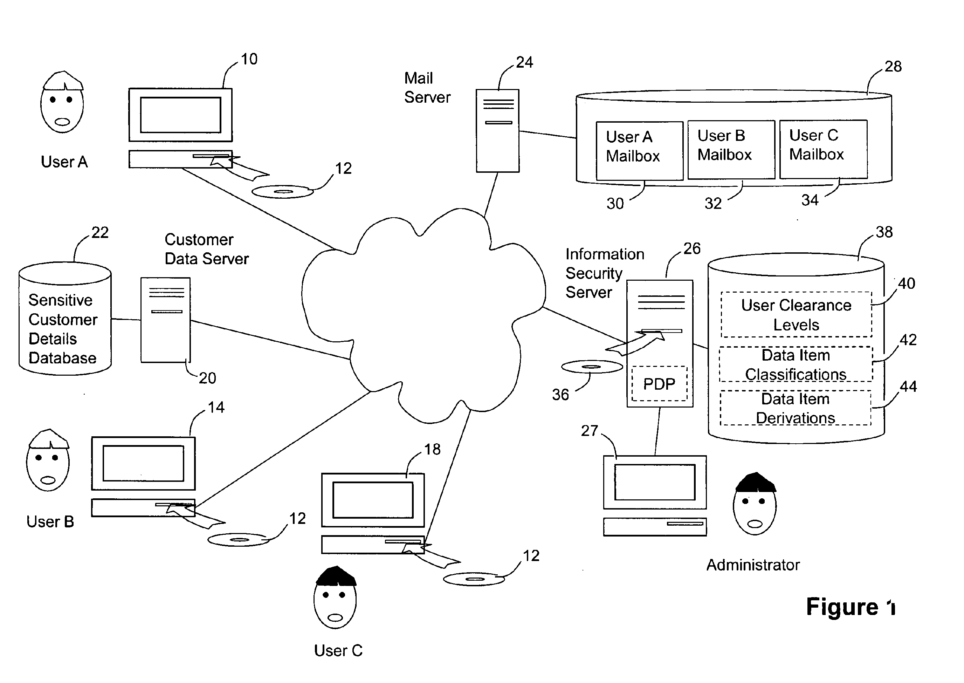

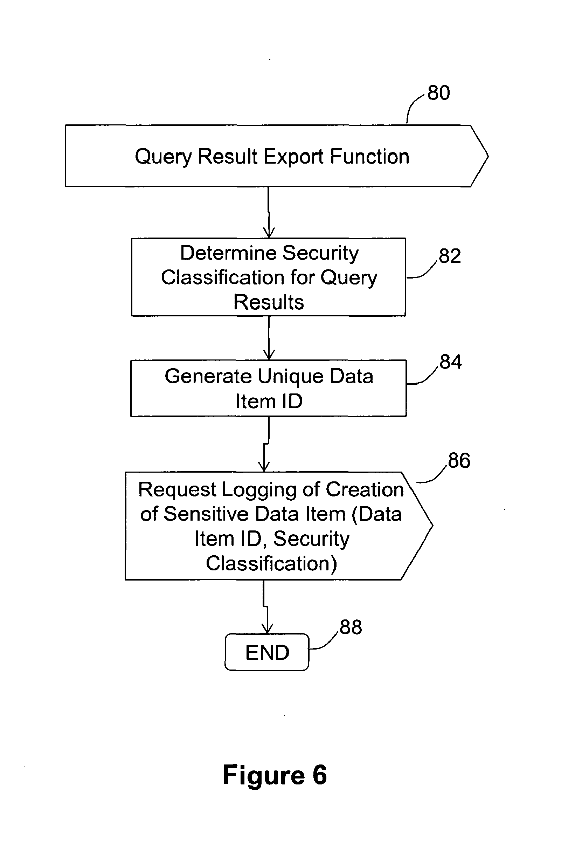

Figure 1 illustrates an enterprise computer network. Employees of the enterprise (User A, User B, User C) are each provided with a personal computer (10, 14, 18). The personal computers have conventional software as well as interprocess communications software enabling the invocation of software installed on remote machines and data item transfer management client software installed from CD-ROM 12. The personal computer 10 of User A and the personal computer 14 of User B are additionally provided with a database client program (whose functionality will be described with reference to Figure 6 below) installed from CD-ROM 12. That database client program includes a facility to 'export' the results of a database query to a spreadsheet file.

The data item transfer management client software could, of course, be installed from some other storage medium (e.g. memory stick), or be downloaded from a computer server over the Internet. Those skilled in the art will understand that the personal computers will offer persistent storage for user data using disk hardware, and that the software installed on the personal computers will include an operating system program which will organise such persistently stored data into files. The conventional software found on each personal computer also includes an e-mail messaging client (e.g. Microsoft Outlook 2010) configured to co-operate with mail server 24 to enable users A, B, C to send one another e-mail data items, which might themselves include other files or data items as 'attachments'. The conventional software further includes a data buffer (e.g. the clipboard offered as part of Microsoft Windows) which the users can use to transfer data between different application programs. As will be understood by those skilled in the art, it is possible to extend the functionality of advanced programs such as Microsoft Outlook by writing so-called 'add-ins' which are started when the application they extend is started. In the present case, the data item transfer management client software comprises i) an add-in for Microsoft Outlook, and ii) an add-in for the database client program.

Each of the personal computers 10, 14, 18 is configured to allow each user to access data on their personal computer, but not to allow access to data on the personal computers of the other users.

The enterprise computer network further includes three server computers (20, 24, 26). These comprise a customer data server computer 20, a mail server computer 24, and an information security server computer 26.

The customer data server computer 20 has conventional hardware and software and provides a query interface to a database 22 which includes sensitive customer data. The database allows the database administrator to assign security classifications to tables within the database. The assigned security classifications are also stored within the database.

The mail server 24 has conventional hardware and software and co-operates with the e-mail client programs on each of the personal computers 10, 14, 18 to offer users an electronic mail service. To enable that service, the mail server computer stores users' e-mails in mailbox store 28 which includes a mailbox 30 for user A, a mailbox 32 for user B and a mailbox 34 for user C.

The information security server computer 26 has, in addition to conventional software and hardware, interprocess communications software enabling the invocation of software installed on remote machines (compatible with the similar software installed on the personal computers 10, 14, 18) and a data item transfer management program installed from CD-ROM 36. The software could, of course, be installed from some other storage medium (e.g. memory stick), or be downloaded from a computer server over the Internet. The data item transfer management program provides an administrator working at console 27 with a graphical user interface enabling him to create, amend and delete user clearance levels data 40 stored in associated persistent storage 38. The administration program also provides a messaging interface allowing the data item transfer management client programs running on personal computers 10, 14, 18 to create, update and delete entries in data item security classification data 42 and data item derivation data 44. As well as allowing the datasets 40, 42, 44 to be maintained, the data item transfer management program offers policy decision point functionality which data item transfer management client software running on a personal computer 10, 14, 18 can invoke to determine, on the basis of data supplied with the invocation message and the three data sets (40, 42, 44) whether a user-requested data item transfer should be allowed to proceed.

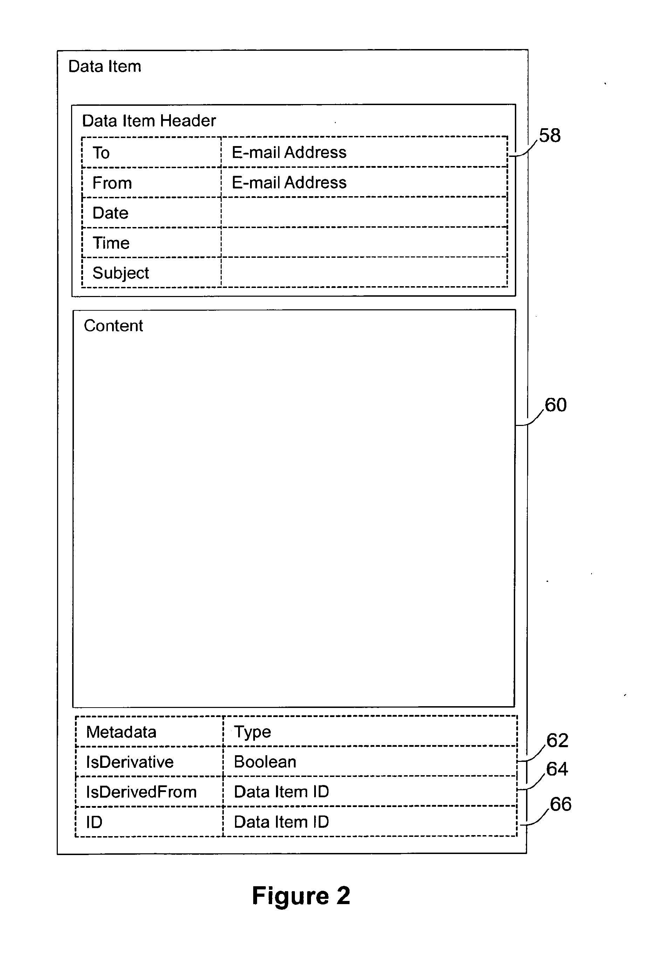

Those data items whose transfer is controlled by the data item transfer management software have a structure (Figure 2) which in addition to the data item's content 60 includes a data item header 58 and three metadata fields 62, 64, 66. It will realised by those skilled in the art that in this particular example where a mail message data item is used, the data item structure used by the application is likely to be much more complex than the simplified version shown here - but the data item structure still includes the elements shown here and programmatic access to the values of those elements is available to the programmer of the add-ins. The first of the three metadata items is a Boolean value 62 (here referred to as 'lsDerivative') indicating whether content in the data item is copied from another data item. The third of the three metadata items is a unique data item identifier 66. The second 64 of the three metadata items is another unique data item which identifies the data item from which some of or all of the content of this data item was copied.

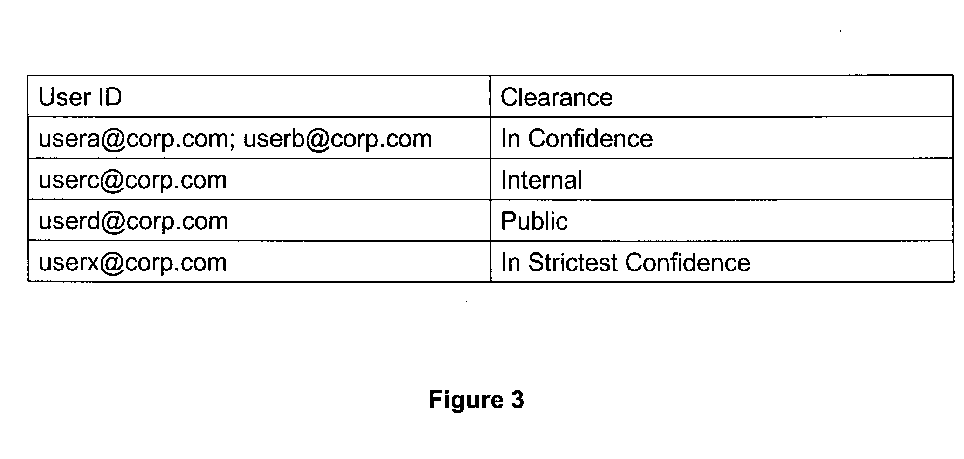

The structure of the user clearance level table 40 stored by the Information Security Server 26 is illustrated in Figure 3. As explained above, this data is maintained by an administrator. The data is a table which associates one or more user IDs (in this example the user's e-mail address is used as a globally unique user ID) with one of four security clearances - namely, Public, Internal, In Confidence, In Strictest Confidence. Those skilled in the art will recognise that this allows the implementation of a mandatory security scheme, where documents are given security classifications, and actions on those documents (including viewing them) are available only to those users whose clearance level meets or exceeds the security classification of the document.

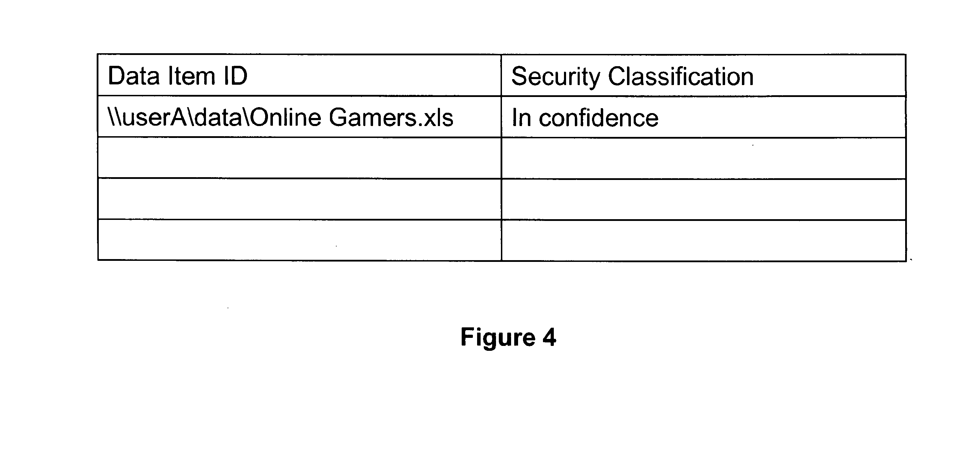

Figure 4 shows the structure of the data item security classifications table maintained by the Information Security Server in co-operation with the data item transfer management clients operating on each of the personal computers 10, 14, 18. This table associates a security classification with each data item ID. This data item ID corresponds to the data item ID 66 included within the metadata of each data item.

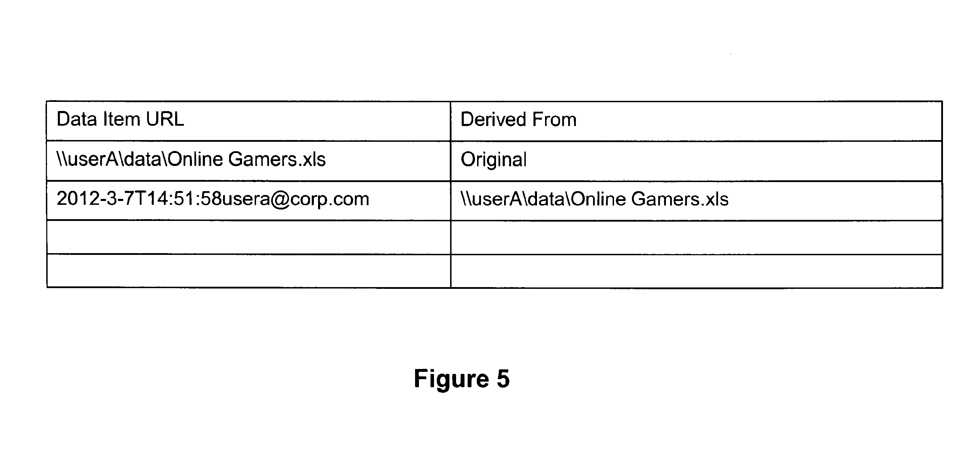

Figure 5 shows the structure of the data item derivations table 44 stored by the Information Security Server computer 26. Each record in the table associates a derivative data item (identified by its unique data item ID) with the data item from which it is derived (again identified by its unique data item ID). Where a data item is present in the data item security classifications table (Figure 4), the data item derivations table includes an indication that the security classification for that data item is to be found in the security classifications table.

In order to manage the dissemination of a data item, the creation of a data item capable of subsequent dissemination (or at least any data item with a security classification greater than some threshold) is logged.

The operation (Figure 6) of the add-in to the database client program installed on the personal computers 10, 14 of user A and user B is triggered 80 on a request by the user to export the results of a database query to a file. The add-in examines the query and queries the database's system catalog to discover the security classification(s) assigned to table(s) accessed by the query, and then associates 82 the highest of those security classifications with the query result. A unique data item ID is then generated 84 for the exported file (in this embodiment, the file's pathname (including a unique computer name) is used). A request to log the creation of a data item is passed 86 to the Information Security Server 26 using the interprocess communications software running on the personal computer 10, 14, 18 and the Information Security Server computer 26.

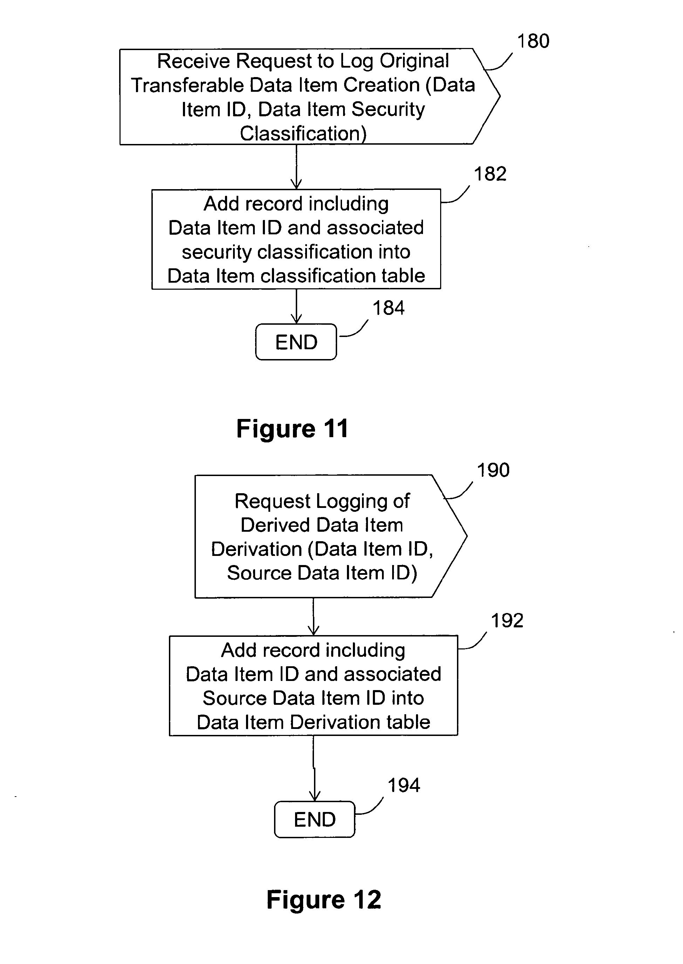

The processing carried out by the Information Security Server computer 26 in response to receiving a request to log the creation of an original transferable data item will be described below with reference to Figure 11.

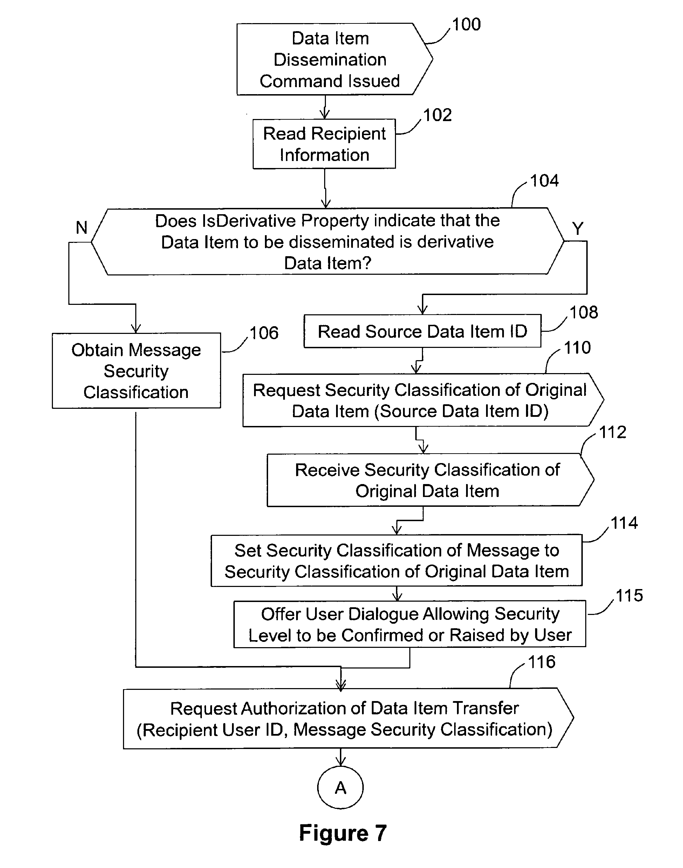

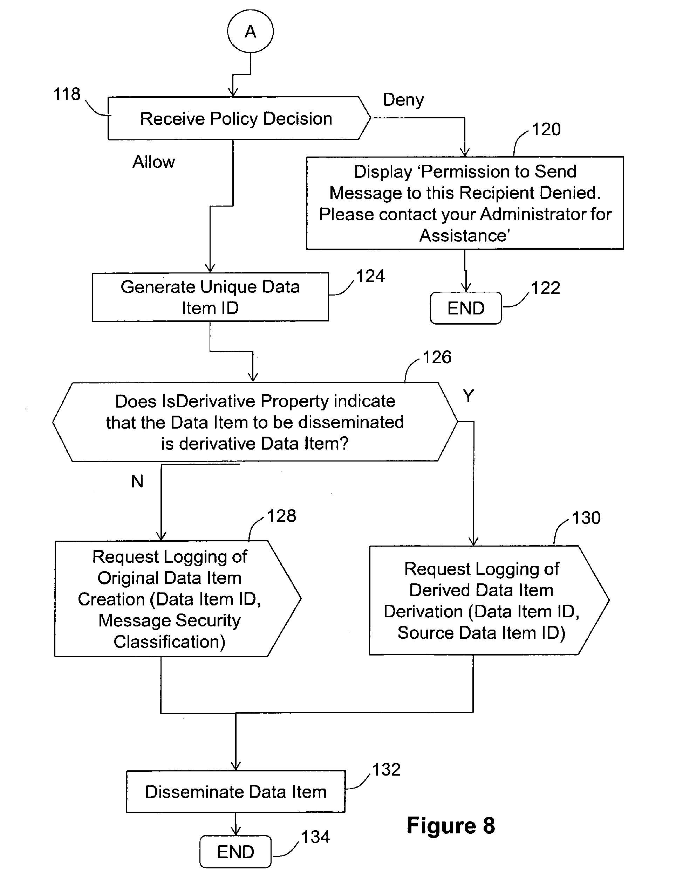

The operation of a data item transfer check procedure included within the add-in (Figures 7 and 8) begins when the issuance of a data item dissemination command by the user is detected 100. Since the add-in on each of the personal computers 10, 14, 18 is, in this embodiment for Microsoft Outlook, this corresponds to the user clicking on the 'Send' button displayed on the screen of the personal computer (10, 14, 18) using his mouse and the familiar Windows, Icon, Mouse, Pointer interface provided with Microsoft Windows.

On the 'send' button being pressed, the recipient information (Figure 2, item 58) from the message is inspected 102 and stored temporarily.

Thereafter a message security classification procedure (104-115) is performed. The procedure begins with the performance of a test 104 to find whether the IsDerivative metadata in the message is set to TRUE. If the IsDerivative value is not set to TRUE, then the user is presented 106 with a drop down menu inviting him to specify whether the message he intends to send should be classified as Public, Internal, In Confidence, or In Strictest Confidence. The user's response is stored temporarily by the program. If the IsDerivative value is TRUE, then an original data item security classification look-up (108 - 112) is triggered.

The original data item security classification look-up (108 - 112) begins by reading 108 the unique data item ID found in the IsDerivedFrom metadata 64 included with the derivative data item the user intends to transfer. Thereafter, using the interprocess communications software installed on the personal computer, a request for the security classification of the original data item from which the source data item derives is sent 110 to the Information Security Server computer 26. The request message includes the source data item ID read in step 108.

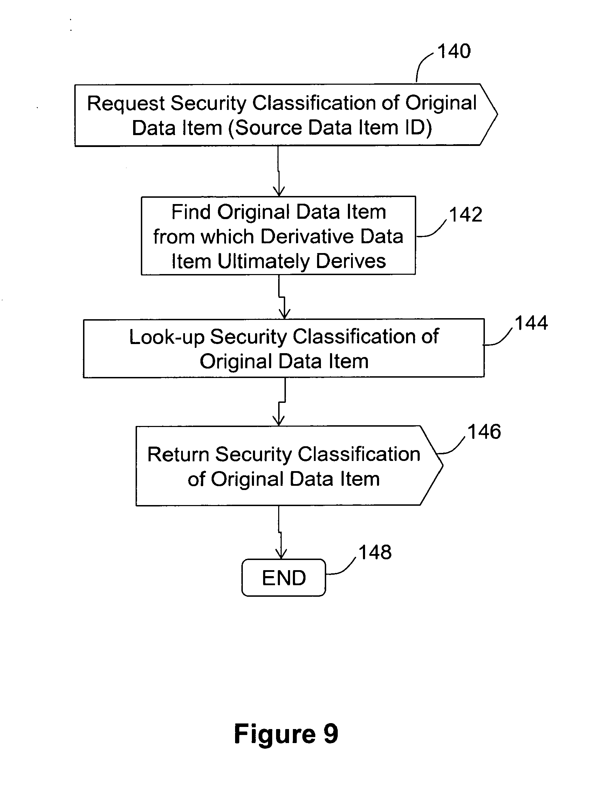

The handling of the request message by the Information Security Server computer 26 will be described below with reference to Figure 9.

Returning to Figure 7, a response message is then received 112, which message includes an indication of the security classification given to the original data item from which information in the data item which the user intends to disseminate is ultimately derived.

The security classification of the message which the user intends to disseminate is then set 114 to the security classification of the data item from which that data item is ultimately derived. Thereafter, a dialogue box is displayed 115 to the user of the personal computer allowing them to raise the security classification applied to the message (which they might wish to do if they have added even more sensitive information to it) or confirm the security classification applied to the message by the system.

Once the message security classification has been established, the interprocess communications software running on the personal computer 10, 14, 18 and the Information Security Server computer 26 is further used to pass 116 a request to the Information Security Server computer 26 requesting a decision as to whether the intended recipient of the message should be sent a message having the security classification given to it by the message security classification procedure (104 - 115). The request includes the user ID of the intended recipient of the message temporarily stored in step 102 and the security classification given to the message by the message security classification procedure (104 - 115).

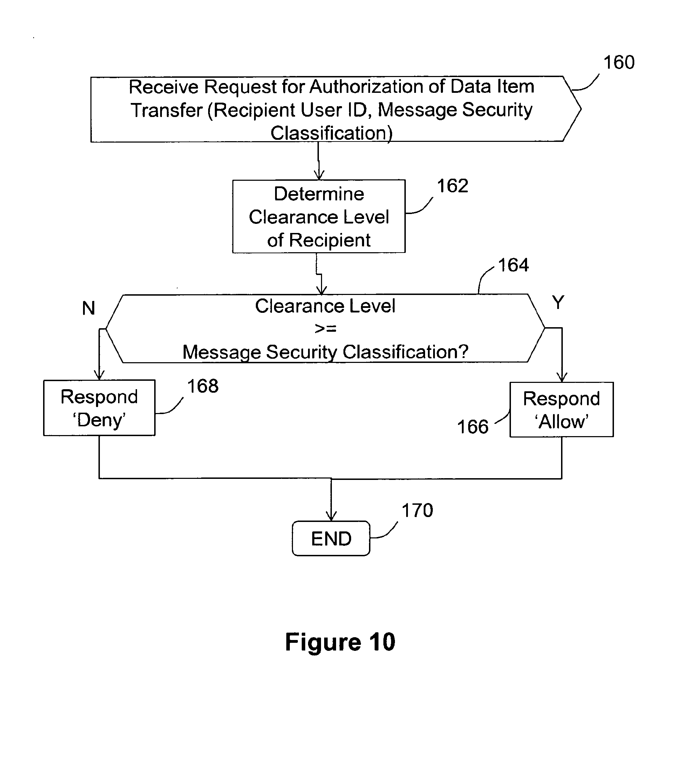

The handling of that request by the Information Security Server computer 26 will be described below with reference to Figure 10.

Moving on now to Figure 8, the process then waits for a reply. When a reply is received 118, and found to be a 'deny' response, a message is displayed 120 to the user indicating that permission to send this message to this recipient has been denied. The message sending, or more generally, data item transfer, is aborted and the data item transfer check procedure ends 122, returning control to Microsoft Outlook.

When a reply is received 118, and found to be an 'allow' response, then the message is given 124 a unique data item ID (in this instance using an globally unique identifier obtained by concatenating the current date and time to the sender's e-mail address).

Thereafter a transferable data item creation recording procedure (126 - 130) is performed. The transferable data item creation recording procedure (126 - 130) begins with the performance of a test 126 to find whether the IsDerivative metadata in the message is set to TRUE. If the IsDerivative value is not set to TRUE, then a request to log the creation of an original data item is passed to the Information Security Server 26 using the interprocess communications software running on the personal computer 10, 14, 18 and the Information Security Server computer 26.

The processing carried out by the Information Security Server computer 26 in response to receiving a request to log the creation of an original transferable data item will be described below with reference to Figure 11.

Returning to Figure 8, if the IsDerivative value is TRUE, then a request to log the creation of a derived data item is passed to the Information Security Server 26 using the interprocess communications software running on the personal computer 10, 14, 18 and the Information Security Server computer 26.

The processing carried out by the Information Security Server computer 26 in response to receiving a request to log the creation of a derived transferable data item will be described below with reference to Figure 12.

Returning once more to Figure 8, after the transferable data item creation recording procedure (126-130) is complete, the data item is disseminated 132 to the recipient. Thereafter, the transfer check procedure ends 134, returning control to Microsoft Outlook.

Turning now to Figure 9, an original data item security classification request handling procedure run by the Information Security Server computer 26 begins on receiving 140 a request for the security classification of an original data item from a personal computer 10, 14, 18. The data item derivations table (Figure 5) is then accessed to find 142 the unique data item ID of the data item from which the source data item is ultimately derived. Those skilled in the art will have little difficulty in providing a procedure to trace the ancestry of the source data item by following the chain of parent data items back through the data item derivations table (Figure 5) until an original data item is reached. It is of course possible that the source data item itself is original and hence that no such chain needs to be traversed.

Once the original data item's ID has been found, the security classification given to the original data item is looked up 144 in the data item security classifications table (Figure 4), and returned 146 to the personal computer 10, 14, 18 which sent the request. Once the response has been sent, the original data item security classification request handling procedure ends.

A data item transfer authorization request handling procedure (Figure 10) run by the Information Security Server computer 26 begins on receiving 160 a transfer authorization request from a personal computer 10, 14, 18. It will be remembered that the data item transfer authorization request message includes the recipient's e-mail address, and the message security classification found in the message security classification procedure (106 - 115). The user clearance level table (Figure 3) is queried 162 to determine the clearance level of the recipient, and a test 164 is then carried out to find whether the clearance level of the intended recipient is greater than or equal to the message's security classification. If the clearance level of the intended recipient is equal to or greater than the message's security classification, then a response indicating that the data item transfer is authorized is sent 166 to the personal computer 10, 14, 18 from which the request was received. Otherwise, a response indicating that the data item transfer is not permitted is sent 168 to the personal computer 10, 14, 18 from which the request was received.

An original data item creation logging request handling procedure (Figure 11) run by the Information Security Server computer 26 receives 180, from one of the personal computers 10, 14, 18, a message requesting the logging of the creation of an original transferable data item. The request includes a globally unique data item ID, and a security classification for the newly created transferable data item. The globally unique data item ID, and the associated security classification are then added to the data item security classification table (Figure 4).

A derived data item creation logging request handling procedure (Figure 12) run by the Information Security Server computer 26 is triggered by the receipt 190, from one of the personal computers 10, 14, 18, of a message requesting the logging of the creation of a derived transferable data item. The request includes a globally unique derived data item ID, and the globally unique identifier of the data item from which it is directly derived. The globally unique data item ID, and the associated globally unique data item ID of the data item from which it is directly derived are then added to the data item derivation table (Figure 5).

In the process illustrated in Figures 7 and 8, the mail message is given a unique identifier at the time it is transmitted because only then are the contents of the message fixed. This arises because Microsoft Outlook and other e-mail clients allow a user to modify the content of an e-mail right up to the time the e-mail is sent. In other applications (e.g. the one described in relation to Figure 6 above), a data item can be created independently of any subsequent transfer of the data item. In such situations, when the derived data item is made transferable - e.g. by saving it as a file on, a persistent storage device - the derived data item is given a unique ID and a record of its derivation is stored centrally.

Should a user subsequently attempt to transfer a derived data item, the transfer process is interrupted to check whether the transfer of the derived data item meets centrally stored file transfer rules. If the transfer violates those rules, the transfer is aborted. In order to carry out the file transfer check, the central derivation record entered on the creation of the derived data item is used to discover the original data item from which the derived data item is ultimately derived. The file transfer security check then applies the rules as they would be applied to the original data item in order to determine whether the transfer of the derived data item is to be authorized. This corresponds to Figure 5 above.

In some situations, the derivation of a data item from another is bundled together with the creation of a transferable version of the derived data item. Examples are a 'Save As..' command. In such a case, an entry can be made in the data item derivation table immediately after the transferable version of the derived data item is created.

In other situations, the copying of the data item takes place independently of whether a uniquely identifiable transferable version is subsequently produced. Examples include attaching the file to an e-mail (perhaps converting the file type to a different file type at the same time), and using a data buffer facility (e.g. the Clipboard in Windows) to copy content from one data item to another.

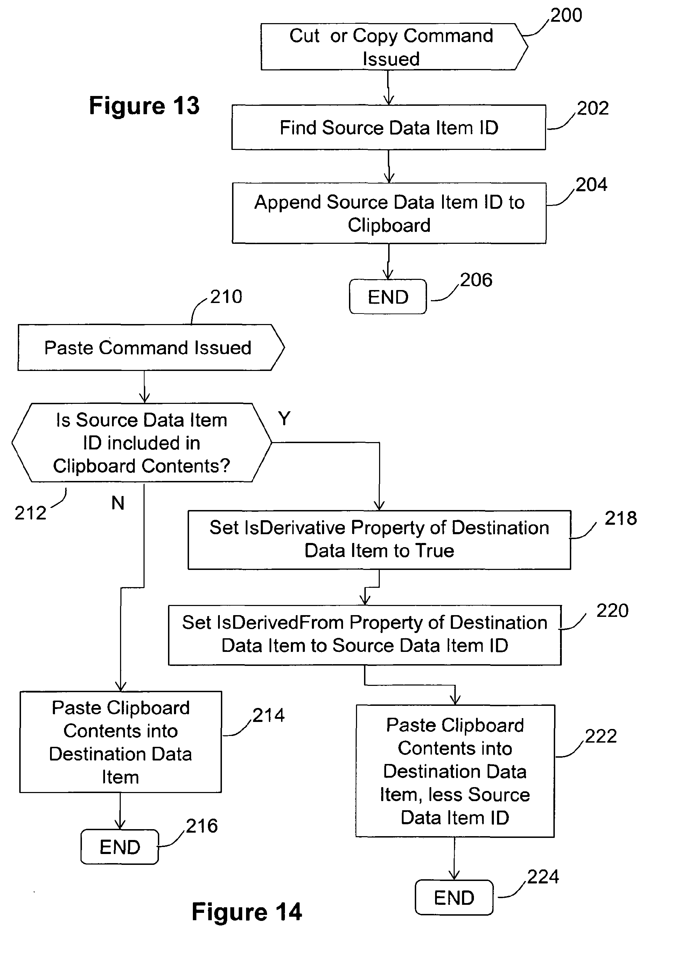

The way in which the present embodiment notes copying of content using a data buffer will now be described with reference to Figures 13 and 14.

A data buffer input handling procedure (Figure 13) begins on detecting 200 an activation of the 'Cut' or 'Copy' command in an application. On detecting usage of the cut or copy command, the globally unique identifier of the document from which content has been cut is found 202, and is added 204 to the clipboard along with the content selected to be cut or copied. The data buffer input handling procedure then ends 206.

A data buffer output handling procedure (Figure 14) begins on detecting 210 the issuance of a 'Paste' command. A test 212 is then performed to find whether a Source Data Item ID is included in the Clipboard contents.

If a Source Data Item ID is not included in the clipboard contents, then the paste functionality is conventional - i.e. the contents of the clipboard are pasted 214 into the destination data item, and the data buffer handling procedure ends 216.

If, on the other hand, the test 212 finds that a Source Data Item ID is included in the clipboard contents, then a derivation recording process (218, 220) is carried out. The derivation recording process begins by setting 218 the IsDerivative property (Figure 2, 62) of the data item into which the clipboard contents are being inserted to TRUE. Thereafter, the IsDerivedFrom property (Figure 2, 64) of the data item into which the clipboard contents are being inserted is set 220 to the Source Data Item ID found on the clipboard. The metadata related to the derivation (Figure 2, 62, 64) are arranged to be immutable once set.

It will be seen that the entry on the clipboard is playing a similar role to the IsDerivative and IsDerivedFrom fields stored in derived data items.

Once the derivation recording process (218, 220) has been carried out, the clipboard contents, less the Source Data Item ID, are pasted 222 into the target data item. Thereafter, the data buffer output handling procedure ends 224.

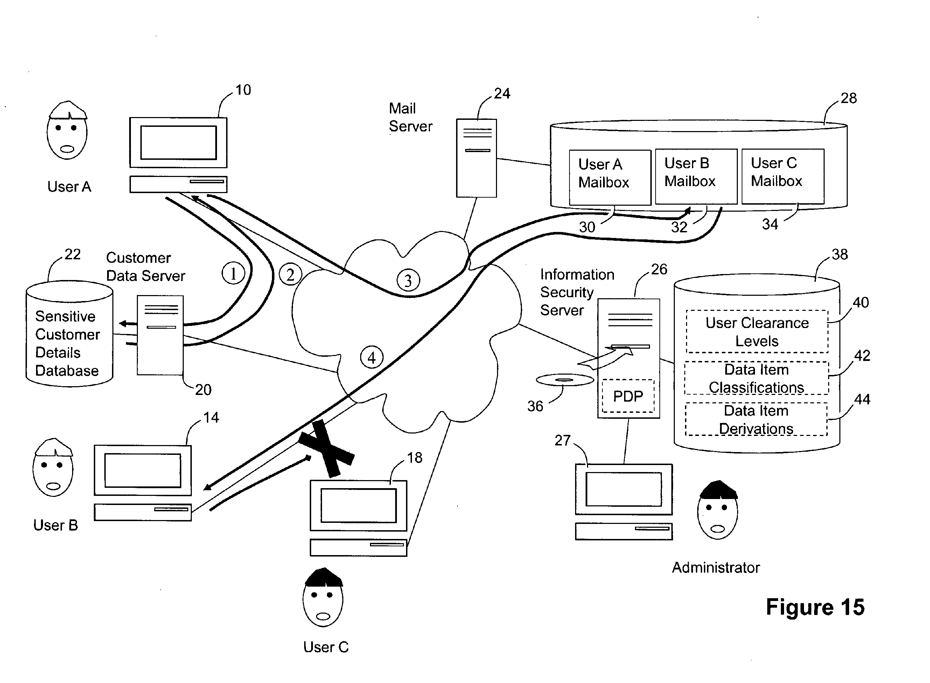

An example of how the embodiment works to prevent the unwanted dissemination of sensitive data items will now be described with references to Figures 15 to 17.

The illustrative scenario is shown in Figure 15. The scenario begins when User A runs the database client on his personal computer 10 to query the sensitive customer details database 22. The results of that query are returned to User A's personal computer. User A then exports the results of that query to a file on his personal computer. In accordance with the processing seen in Figure 6 and Figure 11, this results in that file being assigned an 'In Confidence' security classification. In particular, it results in an entry like that seen in the table of Figure 4.

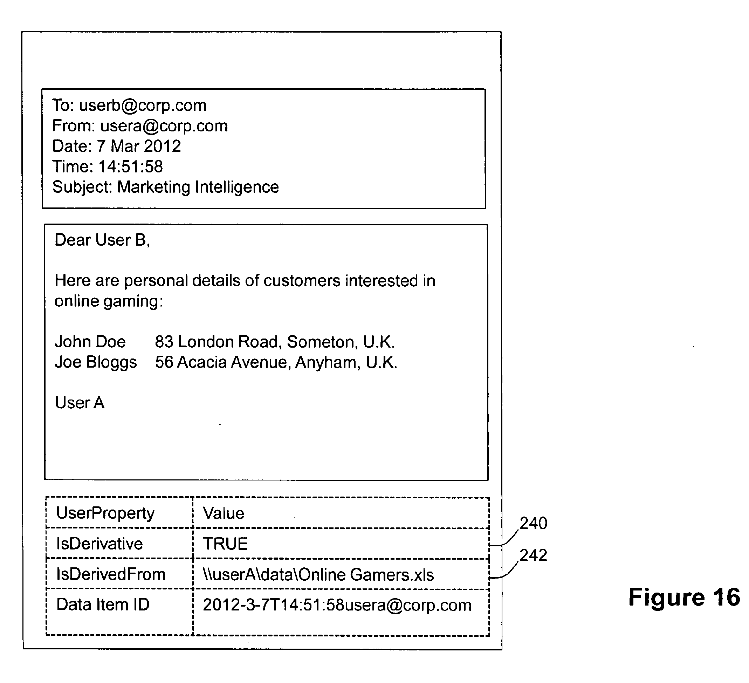

Thereafter, User A runs an application to view the exported file, and uses his computers data buffer copying facility to copy two records from the exported file into an e-mail message (Figure 16). The process seen in Figures 13 and 14 results in the IsDerivative field 240 of the e-mail's metadata being set immutably to TRUE, and the IsDerivedFrom field 242 of the e-mail's metadata being immutably set to the unique ID of the exported file.

When User A attempts to send the e-mail (Figure 16) to User B, the processing of Figures 7 and 8 is carried out. This results in the security classification of the ultimate parent of the exported file being requested from the information security server computer 26 (Figure 7, step 110). This results in the processing of Figure 9 being carried out to find that the exported file has an 'In Confidence' security classification. After that, the security classification of the e-mail message is (provided the user doesn't raise it) set to 'In Confidence'. Authorization to send the e-mail message to User B is then sought (Figure 7, step 116), and is granted by the process of Figure 10, since the user clearance table (Figure 3) indicates that User B is cleared to access documents classified 'In Confidence'.

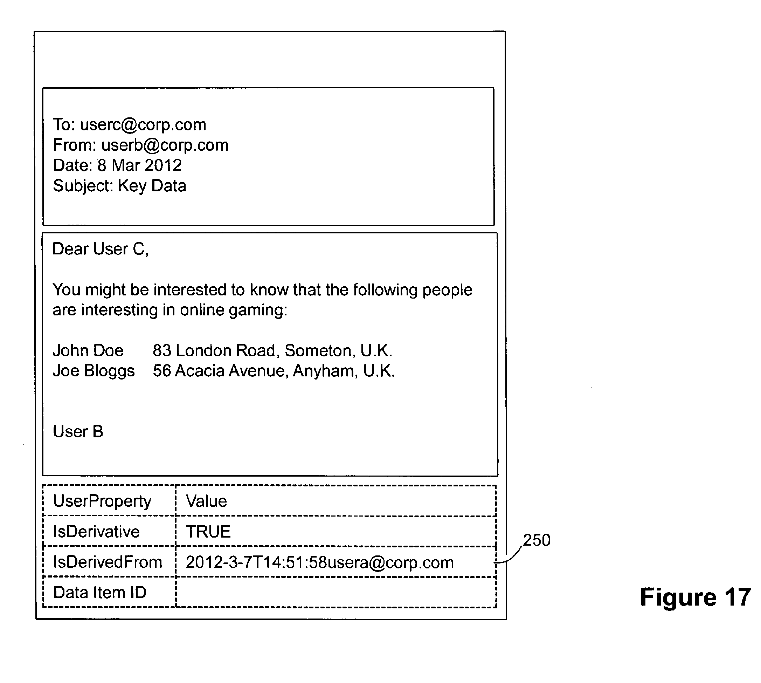

When User B subsequently cuts-and-pastes information from the received e-mail into an e-mail for User C (Figure 17), the derivation is noted in the derivative e-mail's metadata 250. When User B attempts to send the e-mail to User C, step 142 of Figure 9 finds from the data items derivations data (Figure 5) that the origin of information in this e-mail is the exported file \\userA\data\Online Gamers.xls. The security classification of that file is once again found to be 'In Confidence'. Hence, on this occasion, when authorization to send the e-mail message to User C is sought by the add-in to User B's e-mail program, that authorization is denied.

It will be seen how the embodiment prevents the unwanted dissemination of information despite involving devices which provide facilities for copying information between documents, and for sending information to other devices. It will further be seen, how, in a network of electronic devices each electronic device is arranged in operation to record, in a repository shared by the electronic devices, a security classification for an original data item stored on the device, and further arranged in operation to enable the creation of data items derived from original data items or from derived data items, each electronic device labelling derived data items with a reference to a data item from which the derived data item was directly or indirectly derived. Each electronic device is further arranged to receive derived data items from other devices in the network, and to control transmission of derived data items in dependence on the reference within the derived data item and the security classification in the shared repository for the original data item from which the derived data item originates. Using the shared repository allows the centralised update of the security classification of an original data item and documents which originate from that original data item. A single update can then alter the degree to which the networked devices are able to disseminate the original data item and all data items originating from it. This advantageously eases the administration of the network. By also recording each derivation in the shared repository, a register of the provenance of data items derived within the network of electronic devices is maintained.

It will be understood that many variants on the above described embodiment are possible. These include, but are not limited to:
i) whilst the above embodiment described the control of the transmission of private and confidential information between personal computers, in other embodiments, one or both of the personal computers could be substituted by other electronic devices such as media phones, mobile phones, smartphones, tablet computers, digital cameras, game consoles etc. etc.
ii) in the above described embodiment, users where provided with their own personal computers on which they stored data. However, in more complex scenarios, the users would store and read data items in personal directories on a file server shared by a number of users. Where data item transfer is enabled by the user of shared areas of memory on a file server,
iii) in the above-described embodiment, clearance levels were granted to individual users. In more complex scenarios, in addition users would be assigned to groups (roles) and access permissions would be granted to groups of users.
iv) whilst the above-described embodiment described so-called mandatory control (where documents are given one of a set of security classifications and users are given one of a corresponding set of security clearances), in other embodiments, discretionary control might be used. Where discretionary control is used, instead of data items each being given a security classification, data recording which users are allowed to do what with which data items are recorded. This is more flexible than the mandatory control described above.
v) whilst the above embodiment considered the electronic transmission of data items, in other embodiments, the further dissemination might be by the electronic device playing an audio data item, or reading a text data item using text-to-speech technology.
vi) whilst in the above embodiment, the transfer of the copied item was simply prevented, in other embodiments, a user might be alerted that the transfer of the copied data might breach a confidence placed in the user, and the user might be required to confirm the transfer before the transfer is allowed to proceed. Whilst in the above embodiment, the user was alerted as to the failure of the transfer and the reason for that failure, in some embodiments either or both of these alerts might not be given.
vii) in the above embodiment, a decision as to whether rules on the transfer of files would be breached was made at a central information security computer. In other embodiments, the decision as to whether rules on dissemination of origin of information would be breached is made by downloading the rules to the device, and applying those rules. In embodiments spanning more than one administrative domain, each domain might have its own information security computer.
viii) various document properties can be stored with the document, or the document can include a key to an external store of document properties. Implementations in which some of the document properties are stored with the document and others are stored externally are also envisaged. The advantage of storing policies externally is that updating policies to apply to all document transfers within, into or out of a given administrative domain is facilitated.
ix) the source ID can be included in each document generated by users. It is also possible to include intermediate derivation steps. Both could be stored centrally instead of being stored with the data item. This gives the advantage of maintaining a central audit trail of the data items in which private or confidential information has been disseminated.
x) whilst the above embodiment used a table of user clearance levels to give a decision on whether a requested dissemination of a data item should be allowed, more generally sets of rules could be provided, along with software executable to interpret and apply those rules. Depending on the complexity of the rule language (and therefore the rule interpreter), rules could specify rules such as 'Do not allow User A to send finance-related information to anybody outside the finance department'. In other embodiments, so-called Event-Condition-Action rules might be specified, where the rule is triggered by the arrival of an event message at the information security computer - such event messages being used to transfer information about system state around the distributed system. Once a rule of this type is triggered, the condition part of the rule is tested, and if found true, the action is carried out. Rules which are applied to groups of devices are sometimes referred to as policies in the art.
xi) whilst in the above embodiment, the policy decision was simply a binary 'allow' or 'deny' decision, more fine-grained decisions are possible. In particular, in addition to the two options, 'allow' and 'deny' an 'alert' decision might be given which causes the device to issue the user with a warning that what the user's device is about to do might constitute an information security breach, and request the user's confirmation that he wishes to proceed despite the warning. If no such confirmation is given then the requested action is aborted.
xii) whilst the above exemplary embodiment described an enterprise network, in other embodiments the network might extend across a plurality of enterprises.
xiii) whilst the above example contemplated sending a data item to one recipient, those skilled in the art would have little difficulty in adapting the embodiment to handle messages intended to be sent to a plurality of recipients.
xiv) whilst in the above embodiment, e-mail addresses where used as user identifiers, in other embodiments, other user identifiers could be used - for example employee numbers assigned by the enterprise, social security numbers or any other identifier which uniquely identifies users within the enterprise.
xv) whilst the data item ID's used in the above embodiment were globally unique, in other embodiments data item ID's need only be unique within an administrative computing domain.
xvi) whilst in the above embodiment add-in software reported the creation of a transferable data item and checked subsequent requests to transfer that transferable data item, it should be understood that separate add-in programs (possibly from separate software vendors) might perform these two functions.
xvii) whilst in the above embodiment, the functionality of programs already present on many personal computers and server computers within an enterprise was augmented using add-in programs, it will be understood that a vendor of application programs could provide application programs with the corresponding functionality built-in. As a further alternative, the functionality could be provided by installing computer programs which run as a background process (e.g. Windows Services, or Unix daemons) and which interrupt calls from the application programs to utility programs and/or the operating system running on the computer. In this way, calls, for example, to send a file to another machine could trigger a check on the information security server computer to see whether the send should be authorized, and the sending process aborted if the sending is found to be unauthorized. Calls to copy a file, or some of the contents of a file, could similarly be intercepted, and the derivation of the new file from the extant file could be recorded at the information security server computer 26. One technique which can be used to intercept the calls is 'hooking' - which, in effect, involves providing an event handling routine to react to the occurrence of an event message output by the operating system program.
xviii) in the above embodiment, the device obtained the security classification of the original data item from which the derived data item was ultimately derived, and then requested an authorization to send a data item having the security classification of that original data item to one or more users. In alternative embodiments, the authorization request (Figure 7, step 116) could instead pass the source data item ID as a parameter, and the information security server computer 26 could allow or deny the data item transfer without returning the original data item security classification to the device.
xix) in the above embodiment, an add-in to Microsoft Outlook was described. In other embodiments the functionality could be added to, or provided in, any other data item transfer application.
xx) the functionality provided to the e-mail application in the above embodiment could be further augmented by intercepting a request to include an attachment in an e-mail message. The interception could involve requesting the information security server computer 26 to provide the security classification for the attachment, and if the transmission of the message is subsequently allowed, setting the IsDerivedFrom field of the mail message to the unique data item identifier of the attachment, and the IsDerivative property to TRUE.

In summary of the above disclosure, a method of operating an electronic communications device is disclosed. Conventional electronic communications devices offer the benefit that they facilitate both the copying of information and the transfer of the copied information to other devices. However, this results in the unwanted dissemination of private or confidential information also being facilitated. The disclosed electronic communications device labels derivative transferable information it generates with a derivation label enabling the origin of the derived information to be found. The electronic communications device is arranged to interrupt a transfer of derivative transferable information to seek (116) authorization for the transfer. The authorization involves accessing security data which, in combination with the derivation label, enables the security classification applied to the origin of the derived information to be found (112). Where it is found that the transfer of the original information from which the derived information is derived would not be authorized, the electronic communications device is arranged to abort the transfer or alert the user to the fact that the transfer would breach security transfer rules. The method is of use in controlling the dissemination of private or confidential information via networked electronic communications devices.

## Claims

1. A method of operating an electronic communications device to control the dissemination of information from said electronic communication device, said method comprising:
in response to a user attempting to use the electronic communications device to disseminate information derived from source information, obstructing the dissemination of the derived information if the dissemination of the source information would be restricted according to restrictions placed on the dissemination of the source information.

2. A method according to claim 1 wherein dissemination involves transferring the information to one or more other people.

3. A method of operating an electronic communications device according to claim 1, further comprising obtaining the results of an check as to whether the dissemination of the source information would be restricted according to restrictions placed on access to the source information.

4. A method according to claim 1 wherein said dissemination comprises the transmission of an electronic message addressed to one or more other users.

5. A method according to claim 4 wherein the results of said check indicate whether the one or more other users would be authorised to access the source information.

6. A method according to claim 1 wherein said obstruction comprises indicating to the user of said communications device that the dissemination of the information breaches stored dissemination rules associated with said information, and thereafter only disseminating said information on said user operating said device to confirm that said information is to be disseminated.

7. A method according to claim 1 wherein said obstruction comprises aborting the dissemination of the information.

8. A method according to claim 1 further comprising providing said user with a user interface which enables the generation of said derived information from said source information.

9. A method according to claim 8 in which said user interface enables the generation of derived information by the copying of a portion of the source information selected by the user.

10. A method according to claim 1 wherein said information comprises a data item.

11. A method according to claim 10 wherein said data item comprises a digital file.

12. An electronic communications device comprising:
a messaging system operable to disseminate information derived from source information to one or more other people;
a messaging control system operable to respond to a user attempting to use the messaging system to disseminate information derived from source information to one or more other people, by obstructing the dissemination of the derived information if the dissemination of the source information would be restricted according to restrictions placed on the dissemination of the source information.

13. A non-transitory machine-readable medium tangibly embodying a program of instructions executable by an electronic communications device to perform the method of any one of claims 1 to 11.

14. A program of instructions executable by an electronic communications device to perform the method of any one of claims 1 to 11.
